# FASCICULE DE BREVET EUROPEEN

(11) **EP 3 123 254 B1**
(45) Date de publication et mention de la délivrance du brevet: **15.06.2022**
(21) Numéro de dépôt: 15717553.0
(22) Date de dépôt: 20.03.2015
(51) Int. Cl.: G05B 13/02

(54) **PROCÉDÉ DE GESTION GLOBALE OPTIMISÉE D'UN RÉSEAU ÉNERGETIQUE D'UN AÉRONEF ET DISPOSITIF CORRESPONDANT**
VERFAHREN ZUR OPTIMIERUNG DER GLOBALEN VERWALTUNG EINES ENERGIENETZWERKES EINES FLUGZEUGS UND ENTSPRECHENDE VORRICHTUNG
METHOD OF OPTIMIZED GLOBAL MANAGEMENT OF AN ENERGY NETWORK OF AN AIRCRAFT AND CORRESPONDING DEVICE

(30) Priorité: 27.03.2014 FR 1452648
(43) Date de publication de la demande: 01.02.2017
(73) Titulaire: Safran Helicopter Engines, 64510 Bordes (FR)
(72) Inventeur: MERCIER-CALVAIRAC, Fabien, F-64000 Pau (FR); DRACHSLER, Antoine, F-64290 Gan (FR); THIRIET, Romain, F-64110 Jurancon (FR)
(74) Mandataire: Gevers & Orès
(86) Numéro de dépôt international: PCT/FR2015/050700
(87) Numéro de publication internationale: WO 2015/145044

(56) Documents cités:
- EP-A2- 1 420 153
- EP-A2- 2 151 905
- FR-A1- 2 967 133
- US-A1- 2009 204 267
- US-B1- 6 496 741

## Description

### 1. Domaine technique de l'invention

L'invention concerne un procédé de gestion globale optimisée d'un réseau énergétique d'un aéronef. L'invention concerne aussi un dispositif adapté pour mettre en œuvre un procédé selon l'invention.

### 2. Arrière-plan technologique

L'état de la technique comprend notamment les documents US-A1-2009/0204267 et EP-A2-2 151 905.

Un aéronef comprend de manière connue une pluralité d'équipements énergétiques tels que par exemple des moteurs propulsifs, des moteurs non propulsifs, des sources d'énergie, des convertisseurs d'énergie et des stockeurs d'énergie.

L'ensemble des ces équipements énergétiques forme le réseau énergétique de l'aéronef. Cette énergie est plurielle et comprend différentes formes d'énergie telle que l'énergie électrique, l'énergie hydraulique, l'énergie pneumatique et l'énergie mécanique.

Sur la plupart des aéronefs, en particulier les hélicoptères bimoteur, la puissance propulsive des moteurs est répartie de manière uniforme entre les différents moteurs pour uniformiser l'usure des moteurs.

Sur un hélicoptère trimoteur, le pilote a la possibilité de placer volontairement un moteur en veille pendant les phases non critiques du vol, dans un but de réduire la consommation de carburant.

En d'autres termes, il existe actuellement des procédés qui visent à optimiser soit la consommation de carburant des moteurs, soit la durée de vie des moteurs.

Cela étant, ces axes d'optimisation sont limités à certains types particuliers d'aéronefs.

En outre, il n'existe pas de procédés permettant d'optimiser d'autres paramètres, tels que par exemple le confort acoustique à l'intérieur de l'aéronef, la furtivité de l'aéronef, la réactivité de l'aéronef, les émissions polluantes de l'aéronef, et de manière générale tout paramètre qui caractérise l'aéronef.

En outre, il n'existe pas non plus de procédés permettant une gestion conjointe optimisée des énergies propulsives et non propulsives d'un aéronef. Il n'existe pas non plus de procédés d'optimisation énergétique entre les différents moteurs thermiques, électriques ou autre d'un système propulsif d'un aéronef.

Les inventeurs ont donc cherché à fournir un procédé de gestion globale optimisée d'un réseau énergétique d'un aéronef.

### 3. Objectifs de l'invention

L'invention vise à proposer un procédé de gestion globale optimisée d'un réseau énergétique d'un aéronef. L'invention est définie dans les revendications indépendantes 1 et 7. Les modes de réalisation sont définis dans les revendications dépendantes.

L'invention vise en particulier à fournir un tel procédé qui s'adapte à tous types d'aéronef, en particulier aux hélicoptères.

L'invention vise également à fournir un dispositif de gestion globale optimisée d'un réseau énergétique d'un aéronef.

### 4. Exposé de l'invention

Pour ce faire, l'invention concerne un procédé de gestion globale optimisée d'un réseau énergétique d'un aéronef comprenant une pluralité d'équipements énergétiques, suivant le revendication 1.

Un procédé selon l'invention permet donc de fournir aux différents équipements énergétiques d'un réseau énergétique d'un aéronef des consignes de fonctionnement spécifiques qui visent à répondre à un objectif d'optimisation présélectionné parmi une pluralité d'objectifs prédéterminés. La détermination des consignes de fonctionnement dépend d'informations représentatives du fonctionnement des équipements et de l'aéronef. Cela permet de garantir que les consignes ne remettent pas en cause la sécurité du vol. En outre, cela permet d'adapter les consignes à l'environnement opérationnel de l'aéronef à un instant donné.

En d'autres termes, un procédé selon l'invention permet d'optimiser sous contraintes un ou plusieurs paramètres choisis, par exemple, par le pilote de l'aéronef. Le procédé permet donc de répartir la puissance énergétique de l'aéronef d'une manière spécifique (uniforme ou non uniforme) entre les différents équipements pour atteindre un ou plusieurs objectifs d'optimisation.

Selon cet aspect de l'invention, la détermination des consignes de fonctionnement des équipements énergétiques résulte de trois étapes subséquentes.

La première étape (ladite sous-étape de définition de contraintes) est une étape dans laquelle l'environnement de l'aéronef, caractérisé par les données d'aéronef et les objectifs visés, impose certaines contraintes aux équipements du réseau. Par exemple, si l'aéronef est dans une phase de vol critique, certaines contraintes spécifiques sont imposées aux moteurs propulsifs, telle que par exemple, l'obligation de fonctionner à un régime nominal.

La deuxième étape (ladite sous-étape de collection) est une étape dans laquelle une liste restreinte des modes de fonctionnement possibles est établie, à partir des contraintes imposées à l'étape précédente et des données représentatives de l'état des équipements. Par exemple, si un moteur propulsif présente une température proche de sa température limite, certains modes de fonctionnement ne peuvent pas être présélectionnés.

La troisième étape (ladite sous-étape d'élection) est une étape dans laquelle un mode est élu pour chaque équipement parmi la liste restreinte des différents modes de fonctionnement. Ce mode est associé à des consignes pour chaque équipement. Ces consignes peuvent être de différents types. Il peut par exemple s'agir d'un niveau de puissance, de couple ou de vitesse d'un moteur propulsif. Il peut aussi s'agir d'une consigne de température d'un moteur. Il peut aussi s'agir d'une consigne d'atteindre un régime moteur particulier. Par exemple, dans le cas d'un turbomoteur d'un hélicoptère, le régime à atteindre peut être le régime connu sous l'acronyme PMD (Puissance Maximale de Décollage) ou un régime de veille spécifique et de manière générale, tout régime moteur adapté pour atteindre des objectifs d'optimisation sélectionnés.

Avantageusement, un procédé selon l'invention, comprend en outre une étape de calcul d'une grandeur représentative du bénéfice de chaque objectif d'optimisation choisi par rapport à un objectif par défaut.

Cette étape permet de fournir, par exemple au pilote, une indication de l'effet de l'objectif d'optimisation visé par rapport à un objectif par défaut.

Avantageusement et selon cette variante, ledit objectif par défaut vise à répartir de manière optimale en fonction du besoin de l'énergie propulsive entre lesdits équipements énergétiques.

L'objectif par défaut est l'objectif conventionnel visé par les procédés de l'art antérieur. L'invention permet donc de fournir une indication de l'avantage procuré par le mode de fonctionnement choisi par rapport à la répartition optimale de puissance entre les différents moteurs propulsifs.

Avantageusement et selon l'invention, chaque objectif d'optimisation est visé pendant un laps de temps prédéterminé.

Selon cette variante, les objectifs d'optimisation visés le sont pendant un laps de temps prédéterminé.

Avantageusement et selon cette variante de l'invention ledit laps de temps prédéterminé est choisi dans le groupe comprenant un instant ponctuel, un intervalle de temps prédéterminé au cours d'un vol de l'aéronef, une durée correspondant à l'ensemble d'un vol de l'aéronef, à une durée correspondant à une exploitation complète de l'aéronef.

Cela permet de choisir la durée de l'optimisation visée. Par exemple, il est possible de rechercher une optimisation instantanée du comportement du réseau énergétique. Il est aussi possible de viser une optimisation globale sur une mission complète de l'aéronef. Il est aussi possible de viser une optimisation globale sur toute la durée de vie de l'aéronef.

Dans le cas d'une optimisation globale sur une mission ou sur toute la durée de vie de l'aéronef, les algorithmes mis en œuvre par le procédé sont avantageusement intégrés à des outils de préparation de mission ou de gestion de flotte. Ces outils sont par exemple installés chez les clients d'opérateurs d'aéronefs, d'intégrateurs d'aéronefs ou bien accessibles via un portail internet de services de motoriste.

Un procédé selon l'invention permet donc d'optimiser un certain nombre de paramètres, parmi lesquels des paramètres liés à la consommation de carburant, des paramètres liés aux coûts d'exploitation de l'aéronef et des paramètres liés aux émissions de l'aéronef.

Selon l'invention, ladite pluralité d'équipements énergétiques comprend au moins les équipements suivants :
- des moteurs propulsifs de l'aéronef,
- des moteurs non propulsifs,
- des sources d'énergie,
- des convertisseurs d'énergie.

L'invention concerne également un dispositif de gestion globale optimisée d'un réseau énergétique d'un aéronef comprenant une pluralité d'équipements énergétiques, selon la revendication 7.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable ou tout matériel équivalent. D'une manière générale, un module est donc un élément (logiciel et/ou matériel) qui permet d'assurer une fonction.

Le module de sélection du dispositif selon l'invention met avantageusement en œuvre l'étape de sélection du procédé selon l'invention et l'étape de sélection du procédé selon l'invention est avantageusement mise en œuvre par le module de sélection du dispositif selon l'invention.

De même, les modules de réception des données d'aéronef et des données d'équipements mettent avantageusement en œuvre les étapes de réception de données d'aéronef et d'équipements du procédé selon l'invention et ces étapes sont avantageusement mises en œuvre par les modules de réception du dispositif selon l'invention.

De même, le module de détermination de consignes met avantageusement en œuvre l'étape de détermination de consignes d'un procédé selon l'invention et l'étape de détermination de consignes est avantageusement mise en œuvre par le module de détermination du dispositif selon l'invention.

Avantageusement, un dispositif selon l'invention comprend une interface homme-machine adaptée pour interagir avec ledit module de sélection de telle sorte qu'un opérateur peut sélectionner un objectif d'optimisation par le biais de l'interface homme-machine.

Avantageusement, un dispositif selon l'invention comprend en outre un module de calcul d'une grandeur représentative du bénéfice de chaque objectif d'optimisation choisi par rapport à un objectif par défaut.

L'interface homme-machine permet donc à un opérateur, tel qu'un pilote de l'aéronef, de sélectionner un ou plusieurs objectifs d'optimisation qui sont ensuite pris en compte par le module de détermination de consignes, en lien avec d'éventuelles contraintes imposées par l'aéronef, pour définir des modes de fonctionnement des différents équipements énergétiques adaptées pour atteindre ces objectifs.

Ces informations sont par exemple affichées sur des pages dédiées des planches de bord via l'avionique aéronef. Ces informations sont par exemple fournies sous la forme d'indicateurs synthétiques qui permettent à l'opérateur de vérifier que les moteurs propulsifs fonctionnent à l'intérieur de leurs limites nominales validées, de vérifier que les équipements associés aux moteurs propulsifs tels que des moteurs électriques, stockeurs d'énergie et électroniques de commande fonctionnent également à l'intérieur de leurs limites nominales validées (notamment thermiques), et de disposer d'une information sur les optimisations sélectionnées et le bénéfice associé.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un procédé de gestion globale optimisée d'un réseau énergétique d'un aéronef selon un mode de réalisation de l'invention,
- la figure 2 est une vue schématique d'un dispositif de gestion globale optimisée d'un réseau énergétique d'un aéronef selon un mode de réalisation de l'invention.

### 6. Description détaillée d'un mode de réalisation de l'invention

Un procédé selon l'invention comprend une étape 10 de sélection d'au moins un objectif d'optimisation parmi une pluralité d'objectifs prédéterminés.

Il comprend également une étape 11 de réception de données 21 d'équipements représentatives des fonctionnements des équipements énergétiques et de données 20 d'aéronef représentatives du fonctionnement de l'aéronef.

Enfin, il comprend une étape 12 de détermination de consignes 22 de fonctionnement des équipements énergétiques adaptées pour atteindre les objectifs d'optimisation sélectionnés.

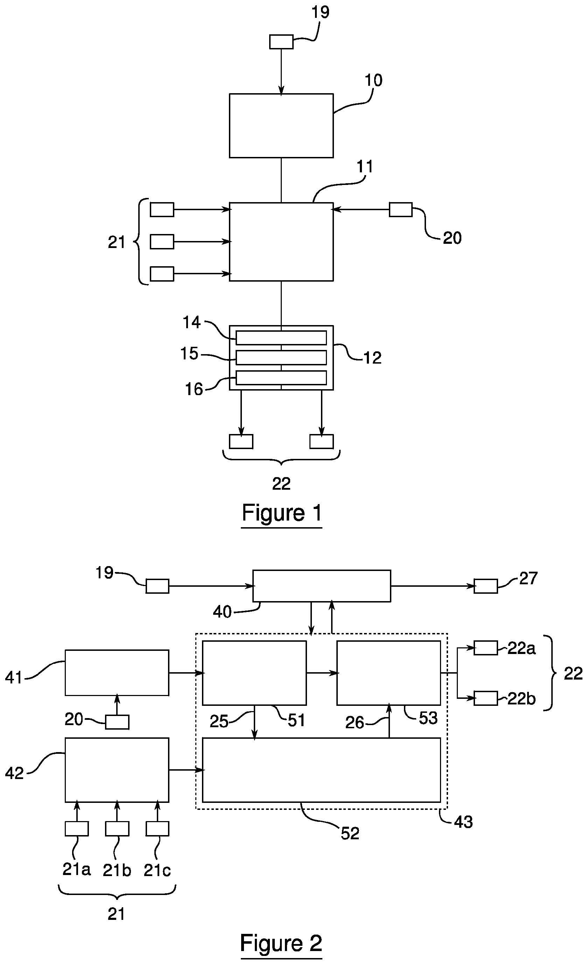

Un procédé selon l'invention est avantageusement mis en œuvre par un dispositif selon l'invention qui comprend, tel que représenté sur la figure 2, un module 40 de sélection d'au moins un objectif 19 d'optimisation parmi une pluralité d'objectifs prédéterminés, un module 41 de réception des données 20 d'aéronef, un module 42 de réception des données 21 d'équipements, et un module 43 de détermination de consignes 22 de fonctionnement des équipements énergétiques.

Dans la suite de la description détaillée, l'aéronef considéré est un hélicoptère comprenant au moins deux turbomoteurs. Chaque turbomoteur comprend un générateur de gaz à turbine libre ou à turbine liée solidaire d'un arbre de sortie entrainée en rotation par le générateur de gaz. L'arbre de sortie de chaque turbine libre ou turbine liée est adapté pour mettre en mouvement une boite de transmission de puissance (désignée ci-après par l'acronyme BTP), qui entraîne elle-même le rotor de l'hélicoptère équipé par exemple de pales à pas variable ou d'autres organes électromécanique ou hydraulique Le réseau énergétique de l'hélicoptère comprend, outre les turbomoteurs, des stockeurs d'énergie, des convertisseurs et des moteurs non propulsifs.

Bien entendu, les modes de réalisation décrits ci-après en lien avec un tel hélicoptère peuvent être adaptés, *mutatis mutandis,* à d'autres types d'aéronef.

Le module de sélection d'un objectif d'optimisation est de préférence une interface homme-machine qui permet à un opérateur - pilote, ingénieur au sol en charge du vol de l'aéronef, etc. - de sélectionner un ou plusieurs objectifs d'optimisation. Par exemple, selon un mode de réalisation, il s'agit d'une molette de sélection d'un objectif parmi une pluralité d'objectifs proposés. Cette interface comprend également de préférence un écran d'affichage d'informations 27 sous la forme d'indicateurs synthétiques permettant à l'opérateur de prendre connaissance des consignes déterminées par le module 43 de détermination. Cette interface permet également de préférence de fournir des informations sur l'état de fonctionnement des différents équipements énergétiques du réseau énergétique de l'aéronef.

Selon le mode de réalisation des figures, les données 21 d'équipements comprennent des données 21a issues des machines thermiques du réseau énergétique de l'aéronef, des données 21b des machines électriques, hydrauliques, pneumatiques et pyrotechniques du réseau énergétique de l'aéronef et des données 21c des stockeurs d'énergie.

Les consignes 22 déterminées par le module 43 comprennent des consignes 22a pour les moteurs thermiques et des consignes 22b pour les moteurs non thermiques.

En outre, le module 43 de détermination des consignes 22a, 22b comprend de préférence un sous-module 51 de définition de contraintes à respecter par les équipements énergétiques du réseau de l'aéronef qui sont fonctions des données 20 d'aéronef et de chaque objectif 19 sélectionné. Ce sous-module 51 met en œuvre l'étape 14 de définition de contraintes d'un procédé selon l'invention.

Il comprend en outre un sous-module 52 de collection, pour chaque équipement énergétique, de modes de fonctionnement possibles qui sont fonctions des contraintes 25 fournies par le sous-module 43 et des données 21a, 21b, 21c d'équipements. Ce sous-module 52 met en œuvre l'étape 15 de collection de modes de fonctionnement possibles d'un procédé selon l'invention

Enfin, il comprend un sous-module 53 d'élection, pour chaque équipement énergétique, d'un mode de fonctionnement parmi la liste 26 des modes de fonctionnement possibles transmise par le sous-module 52. Ce sous-module 53 met en œuvre l'étape 16 d'élection d'un mode de fonctionnement d'un procédé selon l'invention

Selon différentes variantes, certains modules peuvent être regroupés en un seul module de sorte que les algorithmes de détermination de contrainte, de collection de modes de fonctionnement possibles et d'élection peuvent être regroupés du côté moteurs ou du côté de l'aéronef. Différentes architectures sont donc possibles.

En outre, le dispositif selon l'invention comprend un module de calcul d'une grandeur représentative du bénéfice de l'objectif 19 sélectionné par rapport à un objectif par défaut de répartition uniforme de l'énergie. Ce module de calcul est de préférence le sous-module 53 qui connait le mode de fonctionnement choisi.

Selon un mode de réalisation de l'invention, la pluralité d'objectifs prédéterminés sélectionnable comprend des objectifs liés à la consommation de carburant, des objectifs liés aux coûts d'exploitation de l'aéronef et des objectifs liés aux émissions de l'aéronef.

Selon un mode de réalisation de l'invention, les objectifs liés à la consommation de carburant comprennent les objectifs 19 suivants : (i) un objectif de minimisation de la consommation de carburants par les équipements dudit réseau énergétique ; (ii) un objectif de répartition optimale de l'énergie propulsive entre des équipements propulsifs du réseau énergétique; (iii) un objectif de maximisation de la performance transitoire des équipements propulsifs du réseau énergétique, notamment au cours de phases de courtes durées du type phase de décollage.

### (i) Objectif de minimisation de la consommation de carburant

Dans le cas de la sélection d'un objectif de minimisation de la consommation de carburants par les équipements du réseau, les données 20 d'aéronef et les données 21 d'équipements reçues par les modules 41, 42 sont les suivantes :
- Profil prévu de la mission (durée, distance, altitudes/niveaux de vol),
- Conditions de vol (température, pression, vitesses),
- Masse de l'aéronef en temps réel,
- Hauteur sol,
- Niveau de prélèvement (P3, électrique, mécanique, thermique),
- Paramètres moteurs pour la régulation,
- Paramètres de contrôle santé (Etat de charge des stockeurs, Températures des stockeurs, Températures des moteurs de démarrage, etc.).

Le module 43 de détermination de consignes de sortie est configuré pour fournir les consignes suivantes :
- Consigne de répartition de puissance entre les moteurs,
- Consigne de vitesse en tr/min du ou des moteurs (arbre primaire et/ou arbre secondaire) à mettre en veille selon un régime de veille prédéterminé. Un tel régime de veille est par exemple un régime de veille décrit dans la demande de brevet FR1363316 déposée au nom du demandeur,
- Consigne de fonctionnement des équipements du système non-propulsif telle qu'une consigne d'alimentation d'un moteur électrique d'assistance au mode de veille des turbomoteurs.

En outre, l'interface homme-machine 40 est configurée pour fournir au pilote les informations suivantes :
- Nombre de moteurs thermiques en fonctionnement,
- Bénéfice du mode de gestion sélectionné par rapport au mode de gestion symétrique correspondant à l'objectif par défaut,
- Préconisation de la vitesse de vol et de l'altitude,
- Préconisation de répartition des prélèvements pneumatiques et électriques entre les différents moteurs.

Le mode de fonctionnement désigné par le module 43 de détermination permet par exemple de fournir la vitesse de vol idéale pour réduire la consommation et/ou de fournir l'altitude de vol idéale pour réduire la consommation (ex : descendre un peu pour pouvoir mettre en veille un moteur, monter un peu pour augmenter le niveau thermique d'utilisation du ou des moteurs).

### (ii) Objectif de maximisation de la performance transitoire du système propulsif

Dans le cas de la sélection d'un objectif de maximisation de la performance transitoire pour améliorer la réactivité de l'aéronef, par exemple pour améliorer les performances d'évitement d'obstacles, les données 20 d'aéronef et les données 21 d'équipements reçues par les modules 41, 42 sont les suivantes :
- Conditions de vol (Température, Pression),
- Niveau de prélèvement (P3, électrique, mécanique, thermique),
- Paramètres internes moteur pour la régulation,
- Paramètres de contrôle santé (Etat de charge des stockeurs, Températures des stockeurs, Températures des moteurs de démarrage, ...).

Le module 43 de détermination de consignes de sortie est configuré pour fournir les consignes suivantes :
- Consigne de répartition de puissance propulsive et non propulsive entre les moteurs,
- Consigne de vitesse en tr/min du ou des moteurs (arbre primaire et/ou secondaire) en veille,
- Consigne de fonctionnement des équipements du système non-propulsif (gestion des servitudes tels que les prélèvements électriques et pneumatiques).

En outre, l'interface homme-machine 40 est configurée pour fournir au pilote les informations suivantes :
- Informations pilote (nombre de moteurs en fonctionnement),
- Bénéfice du mode de gestion par rapport au mode de gestion symétrique.

Cela permet par exemple d'assurer un délestage transitoire du prélèvement mécanique sur le générateur de gaz dû au prélèvement électrique sur une ou plusieurs turbomachines. Cela permet une utilisation, pendant cette période, du stockeur électrique pour assurer la continuité de la fourniture, ou le délestage transitoire du prélèvement pneumatique sur une ou plusieurs turbomachines. Cela permet une suppression pendant cette période des fonctions de confort alimentées par celui-ci. Cela permet également de fournir une aide à la décélération du générateur de gaz pour minimiser les survitesses.

Dans le cas d'un hélicoptère bimoteur, les consignes peuvent viser une injection de puissance mécanique depuis le stockeur vers le générateur de gaz des moteurs. Dans le cas d'un hélicoptère trimoteur comprenant deux gros moteurs et un petit moteur, ces consignes peuvent viser une injection de puissance mécanique depuis le petit moteur (et/ou depuis un stockeur) vers les générateurs de gaz des gros moteurs. Il peut également s'agir d'une injection de puissance depuis les générateurs de gaz des gros moteurs vers la turbine libre du petit moteur ou vers un stockeur.

### (iii) Objectif de maximisation de la performance de l'aéronef au cours de phases de courtes durées du type phase de décollage

Dans le cas de la sélection d'un objectif de maximisation de la performance transitoire des équipements propulsifs (comme au cours d'une phase de décollage), les données 20 d'aéronef et les données 21 d'équipements reçues par les modules 41, 42 sont les suivantes :
- Conditions de vol (Température, Pression)
- Masse de l'aéronef en temps réel,
- Hauteur sol,
- Niveau de prélèvement (P3, électrique, mécanique, thermique),
- Paramètres internes des moteurs pour la régulation,
- Paramètres de contrôle santé (Etat de charge des stockeurs, Températures des stockeurs, Températures des moteurs de démarrage, ...).

Le module 43 de détermination de consignes de sortie est configuré pour fournir les consignes suivantes :
- Consigne de répartition de puissance propulsive et non propulsive entre les moteurs,
- Autorisation (libération) par la régulation moteur de régimes AEO (*All Engines Operative*) ou OEI (*One Engine Inoperative*) spécifiques,
- Consigne de fonctionnement des équipements du système non-propulsif.

En outre, l'interface homme-machine 40 est configurée pour fournir au pilote les informations suivantes :
- Nombre de moteur en fonctionnement et régimes autorisés pour chaque moteur thermique,
- Bénéfice du mode de gestion par rapport au mode de gestion symétrique.

Cet objectif peut par exemple conduire à l'injection de puissance pendant 5 à 30s sur le générateur de gaz via un moteur électrique alimentée depuis un stockeur ou un APU ou directement via un des moteurs thermiques sur les autres. Il peut également conduire à l'injection de puissance pendant 5 à 30s sur l'arbre turbine libre via un moteur électrique alimentée depuis un stockeur ou un APU ou directement via un des moteurs thermiques sur les autres. Il permet également la définition de différentes structures de régimes pour chaque moteur qui seront activées suivant le type de mission de l'hélicoptère.

D'autres types d'objectifs liés à l'optimisation de la consommation de carburant sont possibles. Par exemple, il peut être prévu un objectif d'amélioration de la précision des opérations de contrôle santé des moteurs. Un tel objectif vise à pouvoir modifier la répartition des puissances entre moteurs pour améliorer la précision du Contrôle Santé Moteur en effectuant cette opération à un régime suffisamment élevé sur le moteur concerné et en supprimant des facteurs d'imprécision tels que les prélèvements non propulsifs de type *air bleed* ou prélèvement de puissance mécanique/électrique qui peuvent être basculés sur un autre moteur. Les opérations de Contrôle Santé Moteur peuvent être également enrichies sur le plan du contrôle de santé vibratoire en exploitant des modes de fonctionnement permettant de désaligner les moteurs pour se mettre à des régimes précis ou réaliser des balayages en régimes.

Selon un mode de réalisation de l'invention, les objectifs liés à la minimisation des coûts d'exploitation comprennent : (iv) un objectif de minimisation des coûts d'exploitation.

### (iv) Objectif de minimisation des coûts d'exploitation

Dans le cas de la sélection d'un objectif de minimisation des coûts d'exploitation de l'aéronef, les données 20 d'aéronef et les données 21 d'équipements reçues par les modules 41, 42 sont les suivantes :
- Conditions de vol (Température, Pression, Vitesses),
- Masse de l'aéronef en temps réel,
- Nombre de passagers ou charge marchande,
- Paramètres internes des moteurs pour la régulation,
- Paramètres de contrôle santé (Etat de charge des stockeurs, Températures des stockeurs, Températures des moteurs de démarrage, ...),
- Compteur d'endommagement,
- Compteur de cycles pour de la fatigue oligocyclique.

Le module 43 de détermination de consignes de sortie est configuré pour fournir les consignes suivantes :
- Consigne de répartition de puissance entre les moteurs,
- Consigne de vitesse en tr/min du ou des moteurs (arbre primaire et/ou arbre secondaire) en veille,
- Consigne de fonctionnement des équipements du système non-propulsif (consigne d'alimentation d'un moteur électrique en mode vireur).

En outre, l'interface homme-machine 40 est configurée pour fournir au pilote les informations suivantes :
- Bénéfice du mode de gestion par rapport au mode de gestion symétrique,
- Préconisation de la vitesse de vol et de l'altitude.

Cet objectif peut par exemple viser à minimiser le nombre de cycles ou à ne pas dépasser certaines températures internes des turbomachines.

D'autres types d'objectifs liés à la minimisation des coûts sont possibles. Par exemple, il peut être recherché de minimiser les coûts opérationnels directs des moteurs ou de l'aéronef (combinaison des coûts de maintenance et coût du carburant). Il peut aussi être recherché de recaler les opérations de maintenance moteurs ou hélicoptère : l'usage de modes de fonctionnement dissymétriques entre moteurs induit des endommagements et des consommations en cycles différents entre les moteurs installés sur un même aéronef. Si l'on souhaite retarder les opérations de maintenance sur un des moteurs (par exemple qui serait proche d'une des limitations nécessitant une opération de maintenance), il est possible de concevoir une logique économisant ce moteur au profit des moteurs disposant de plus de marge en opération de maintenance. Un mode analogue peut être proposé pour économiser la BTP d'un hélicoptère qui peut vieillir différemment en fonction du niveau d'asymétrie entre les différentes entrées correspondant aux différents moteurs.

En plus des objectifs précisés dans les revendications, il pourrait être prévu des logiques pour optimiser les émissions. En particulier, des modes de fonctionnement asymétrique donne un ou plusieurs degrés de liberté (via la répartition de puissance entre moteurs) pour minimiser différentes signatures de l'aéronef et de ses moteurs.

En plus des objectifs précisés dans les revendications, il pourrait être prévu un objectif de minimisation du bruit externe. En fonction des caractéristiques acoustiques des différentes sources moteurs et aéronef et de la connaissance d'une cartographie des terrains environnants, il est possible de déterminer à chaque instant la répartition de puissance entre moteurs minimisant le bruit perçu d'un point donné.

En plus des objectifs précisés dans les revendications, il pourrait être prévu un objectif de minimisation du bruit interne. En fonction des caractéristiques acoustiques des différentes sources moteurs et aéronef et de la caractéristique de transfert de l'aéronef, il est possible de déterminer la répartition de puissance entre moteurs minimisant le bruit perçu à l'intérieur de l'aéronef.

En plus des objectifs précisés dans les revendications, il pourrait être prévu un objectif de minimisation de la Surface Infra-Rouge (SIR). A l'aide des modèles de performances moteurs et des caractéristiques des échappements, il est possible de construire un estimateur de SIR qui peut être minimisée en jouant sur la répartition de puissance entre moteurs dans chaque phase de vol.

En plus des objectifs précisés dans les revendications, il pourrait être prévu un objectif de minimisation des émissions polluantes (CO2, CO, NOx, imbrûlés, etc ...). A l'aide des modèles d'émissions polluantes moteurs, il est possible d'évaluer les émissions polluantes instantanées qui peuvent être minimisées en jouant sur la répartition de puissance entre moteurs dans chaque phase de vol. Dans l'hypothèse de la mise en place d'un système de taxation des émissions polluantes, un modèle économique peut être développé pour évaluer le montant des taxes dues par l'opérateur au titre de la réalisation de sa mission.

En plus des objectifs précisés dans les revendications, il pourrait être prévu un objectif de minimisation des niveaux vibratoires. En fonction des caractéristiques vibratoires des différentes sources d'excitation moteurs et aéronef et de la caractéristique de transfert de l'aéronef, il est possible de déterminer la répartition de puissance entre moteurs minimisant le niveau vibratoire en un point donné de l'aéronef.

L'invention ne se limite pas aux seuls modes de réalisation décrits. En particulier, d'autres objectifs d'optimisation et logiques associés peuvent être intégrés dans un dispositif et un procédé selon l'invention.

## Revendications

1. Procédé mis en œuvre par un dispositif de gestion globale optimisée d'un réseau énergétique d'un aéronef comprenant une pluralité d'équipements énergétiques, le procédé étant **caractérisé par**
- une étape (10) de sélection d'au moins un objectif (19) d'optimisation parmi les objectifs suivants :
- un objectif de minimisation de la consommation de carburants par lesdits équipements dudit réseau énergétique,
- un objectif de maximisation de la performance transitoire desdits équipements propulsifs dudit réseau énergétique,
- un objectif de maximisation de la performance de l'aéronef au cours de phases de courtes durées du type phase de décollage,
- un objectif de minimisation des coûts de maintenance des équipements,
et, si l'objectif de minimisation de la consommation de carburants par lesdits équipements dudit réseau énergétique est sélectionné :
- une étape (11) de réception des informations suivantes :
- profil prévu de la mission,
- conditions de vol,
- masse de l'aéronef en temps réel,
- hauteur sol,
- niveau de prélèvement sur les équipements énergétiques,
- paramètres moteurs,
- paramètres de contrôle santé incluant : état de charge de stockeurs, températures des stockeurs, température de moteurs de démarrage,
- une étape (12) de détermination des consignes (22) suivantes :
- consigne de répartition de puissance entre les moteurs,
- consigne de vitesse en tr/min d'un arbre primaire et/ou secondaire d'un moteur à mettre en veille,
- consigne de fonctionnement des équipements du système non-propulsif,
si l'objectif de maximisation de la performance transitoire desdits équipements propulsifs dudit réseau énergétique est sélectionné :
- une étape (11) de réception des informations suivantes :
- conditions de vol,
- niveau de prélèvement sur les équipements énergétiques,
- paramètres internes moteur,
- paramètres de contrôle santé incluant : état de charge de stockeurs, températures des stockeurs, température de moteurs de démarrage,
- une étape (12) de détermination des consignes (22) suivantes :
- consigne de répartition de puissance entre les moteurs,
- consigne de vitesse en tr/min d'un arbre primaire et/ou secondaire d'un ou plusieurs moteurs en veille,
- consigne de fonctionnement des équipements du système non-propulsif,
si l'objectif de maximisation de la performance de l'aéronef au cours de phases de courtes durées du type phase de décollage est sélectionné :
- une étape (11) de réception des informations suivantes :
- conditions de vol,
- masse de l'aéronef en temps réel,
- hauteur sol,
- niveau de prélèvement sur les équipements énergétiques,
- paramètres internes de moteurs,
- paramètres de contrôle santé incluant : état de charge de stockeurs, températures des stockeurs, température de moteurs de démarrage,
- une étape (12) de détermination des consignes (22) suivantes :
- consigne de répartition de puissance entre les moteurs,
- Autorisation par la régulation moteur de régimes AEO ou OEI,
- consigne de fonctionnement des équipements du système non-propulsif,
si l'objectif de minimisation des coûts de maintenance des équipements est sélectionné :
- une étape (11) de réception des informations suivantes :
- conditions de vol,
- masse de l'aéronef en temps réel,
- nombre de passagers ou charge marchande,
- paramètres internes de moteurs,
- paramètres de contrôle santé incluant : état de charge de stockeurs, températures des stockeurs, température de moteurs de démarrage,
- compteur d'endommagement,
- compteur de cycles pour de la fatigue oligocyclique,
- une étape (12) de détermination des consignes (22) suivantes :
- consigne de répartition de puissance entre les moteurs,
- consigne de vitesse en tr/min d'un arbre primaire et/ou secondaire en veille,
- consigne de fonctionnement des équipements du système non-propulsif.

2. Procédé selon la revendication 1, **caractérisé en ce qu'**il comprend en outre une étape de calcul d'une grandeur représentative du bénéfice de chaque objectif d'optimisation choisi par rapport à un objectif par défaut.

3. Procédé selon la revendication 2, **caractérisé en ce que** ledit objectif par défaut vise à répartir de manière optimale, en fonction du besoin, l'énergie propulsive entre lesdits équipements énergétiques.

4. Procédé selon l'une des revendications 1 à 3, **caractérisé en ce que** chaque objectif (19) d'optimisation est visé pendant un laps de temps prédéterminé.

5. Procédé selon la revendication 4, **caractérisé en ce que** ledit laps de temps prédéterminé est choisi dans le groupe comprenant un instant ponctuel, un intervalle de temps prédéterminé au cours d'un vol de l'aéronef, une durée correspondant à l'ensemble d'un vol de l'aéronef, à une durée correspondant à une exploitation complète de l'aéronef.

6. Procédé selon l'une des revendications 1 à 5, **caractérisé en ce que** ladite pluralité d'équipements énergétiques comprend au moins les équipements suivants :
- des moteurs propulsifs de l'aéronef,
- des moteurs non propulsifs,
- des sources d'énergie,
- des convertisseurs d'énergie.

7. Dispositif de gestion globale optimisée d'un réseau énergétique d'un aéronef comprenant une pluralité d'équipements énergétiques, comprenant :
- un module (40) de sélection d'au moins un objectif (19) d'optimisation parmi les objectifs suivants :
- un objectif de minimisation de la consommation de carburants par lesdits équipements dudit réseau énergétique,
- un objectif de maximisation de la performance transitoire desdits équipements propulsifs dudit réseau énergétique,
- un objectif de maximisation de la performance de l'aéronef au cours de phases de courtes durées du type phase de décollage,
- un objectif de minimisation des coûts de maintenance des équipements,
- un module (42) de réception d'informations représentatives des fonctionnements desdits équipements énergétiques, dites (21a, 21b, 21c) données d'équipements,
- un module (41) de réception d'informations représentatives du fonctionnement dudit aéronef, dites données (20) d'aéronef,
- un module (43) de détermination de consignes (22a, 22b) de fonctionnement desdits équipements énergétiques à partir desdites données (21a, 21b, 21c) d'équipements et desdites données (20) d'aéronef,
le dispositif étant configuré pour mettre en œuvre toutes les étapes du procédé suivant l'une quelconque des revendications 1 à 6.

8. Dispositif selon la revendication 7, **caractérisé en ce qu'**il comprend une interface homme-machine adaptée pour interagir avec ledit module (40) de sélection de telle sorte qu'un opérateur peut sélectionner un objectif (19) d'optimisation par le biais de l'interface homme-machine.

9. Dispositif selon l'une des revendications 7 et 8, **caractérisé en ce qu'**il comprend en outre un module de calcul d'une grandeur représentative du bénéfice de chaque objectif (19) d'optimisation choisi par rapport à un objectif par défaut.

## Patentansprüche

1. Verfahren, das von einer optimierten globalen Verwaltungsvorrichtung eines Energienetzwerks eines Flugzeugs eingesetzt wird, umfassend eine Vielzahl von Energieausstattungen, wobei das Verfahren **gekennzeichnet ist durch**
- einen Schritt (10) der Auswahl mindestens eines Optimierungsziels (19) unter den folgenden Zielen:
- ein Ziel der Kraftstoffverbrauchsminimierung durch die Ausstattungen des Energienetzwerks,
- ein Ziel der vorübergehenden Leistungsmaximierung der Antriebsausstattungen des Energienetzwerks,
- ein Ziel der Leistungsmaximierung des Flugzeugs im Laufe von Phasen kurzer Dauer vom Typ Abflugphase,
- ein Ziel der Kostenminimierung der Ausstattungswartung,
und wenn das Ziel der Kraftstoffverbrauchsminimierung durch die Ausstattungen des Energienetzwerks ausgewählt wird:
- einen Schritt (11) des Empfangs der folgenden Informationen:
- vorhergesehenes Profil der Mission,
- Flugbedingungen,
- Flugzeugmasse in Echtzeit,
- Flughöhe,
- Entnahmeniveau an den Energieausstattungen,
- Motorparameter,
- Gesundheitszustandssteuerungsparameter, einschließlich: Ladezustand von Speichern, Temperatur der Speicher, Motorenstarttemperatur,
- einen Schritt (12) der Bestimmung der folgenden Vorgaben (22):
- Leistungsaufteilungsvorgabe zwischen den Motoren,
- Geschwindigkeitsvorgabe in rpm einer primären und/oder sekundären Welle eines in Bereitschaftsmodus zu versetzenden Motors,
- Betriebsvorgabe der Ausstattungen des Nicht-Antriebssystems, wenn das Ziel der vorübergehenden Leistungsmaximierung der Antriebsausstattungen des Energienetzwerks ausgewählt wird:
- einen Schritt (11) des Empfangs der folgenden Informationen:
- Flugbedingungen,
- Entnahmeniveau an den Energieausstattungen,
- innere Motorparameter,
- Gesundheitszustandssteuerungsparameter, einschließlich: Ladezustand von Speichern, Temperatur der Speicher, Motorenstarttemperatur,
- einen Schritt (12) der Bestimmung der folgenden Vorgaben (22):
- Leistungsaufteilungsvorgabe zwischen den Motoren,
- Geschwindigkeitsvorgabe in rpm einer primären und/oder sekundären Welle eines oder mehrerer Motoren in Bereitschaftsmodus,
- Betriebsvorgabe der Ausstattungen des Nicht-Antriebssystems,
wenn das Ziel der Leistungsmaximierung des Flugzeugs im Laufe von Phasen kurzer Dauer vom Typ Abflugphase ausgewählt wird:
- einen Schritt (11) des Empfangs der folgenden Informationen:
- Flugbedingungen,
- Flugzeugmasse in Echtzeit,
- Flughöhe,
- Entnahmeniveau an den Energieausstattungen,
- innere Motorenparameter,
- Gesundheitszustandssteuerungsparameter, einschließlich: Ladezustand von Speichern, Temperatur der Speicher, Motorenstarttemperatur,
- einen Schritt (12) der Bestimmung der folgenden Vorgaben (22):
- Leistungsaufteilungsvorgabe zwischen den Motoren,
- Genehmigung durch die Motorregelung von AEO- oder OIE-Betrieben,
- Betriebsvorgabe der Ausstattungen des Nicht-Antriebssystems, wenn das Ziel der Kostenminimierung der Ausstattungswartung ausgewählt wird:
- einen Schritt (11) des Empfangs der folgenden Informationen:
- Flugbedingungen,
- Flugzeugmasse in Echtzeit,
- Anzahl der Fluggäste oder Nutzlast,
- innere Motorenparameter,
- Gesundheitszustandssteuerungsparameter, einschließlich: Ladezustand von Speichern, Temperatur der Speicher, Motorenstarttemperatur,
- Beschädigungszähler,
- Zykluszähler für die Ermüdung bei geringer Lastspielzahl;
- einen Schritt (12) der Bestimmung der folgenden Vorgaben (22):
- Leistungsaufteilungsvorgabe zwischen den Motoren,
- Geschwindigkeitsvorgabe in rpm einer primären und/oder sekundären Welle im Bereitschaftsmodus,
- Betriebsvorgabe der Ausstattungen des Nicht-Antriebssystems.

2. Verfahren nach Anspruch 1, **dadurch gekennzeichnet, dass** es weiter einen Schritt der Berechnung einer den Nutzen jedes ausgewählten Optimierungsziels darstellenden Größe in Bezug auf ein Standardziel umfasst.

3. Verfahren nach Anspruch 2, **dadurch gekennzeichnet, dass** das Standardziel anstrebt, die Antriebsenergie zwischen den Energieausstattungen auf optimale Weise in Abhängigkeit vom Bedarf aufzuteilen.

4. Verfahren nach einem der Ansprüche 1 bis 3, **dadurch gekennzeichnet, dass** jedes Optimierungsziel (19) während eines vorbestimmten Zeitablaufs angestrebt wird.

5. Verfahren nach Anspruch 4, **dadurch gekennzeichnet, dass** der vorbestimmte Zeitablauf aus der Gruppe ausgewählt wird, die ein pünktlicher Zeit, ein vorbestimmtes Zeitintervall im Laufe eines Flugs des Flugzeugs, eine Dauer, die der Gesamtheit eines Flugs des Flugzeugs entspricht, eine Dauer, die einer vollständigen Nutzung des Flugzeugs entspricht, umfasst.

6. Verfahren nach einem der Ansprüche 1 bis 5, **dadurch gekennzeichnet, dass** die Vielzahl von Energieausstattungen mindestens die folgenden Ausstattungen umfasst:
- Antriebsmotoren des Flugzeugs,
- Nicht-Antriebsmotoren,
- Energiequellen,
- Energiewandler.

7. Optimierte globale Verwaltungsvorrichtung eines Energienetzwerks eines Flugzeugs, die eine Vielzahl von Energieausstattungen umfasst, umfassend:
- ein Modul (40) zur Auswahl mindestens eines Optimierungsziels (19) unter den folgenden Zielen:
- ein Ziel der Kraftstoffverbrauchsminimierung durch die Ausstattungen des Energienetzwerks,
- ein Ziel der vorübergehenden Leistungsmaximierung der Antriebsausstattungen des Energienetzwerks,
- ein Ziel der Leistungsmaximierung des Flugzeugs im Laufe von Phasen kurzer Dauer vom Typ Abflugphase,
- ein Ziel der Kostenminimierung der Ausstattungswartung,
- ein Modul (42) zum Empfang von Informationen, die die Betriebe der Energieausstattungen darstellen, als Ausstattungsdaten bezeichnet (21a, 21b, 21c),
- ein Modul (41) zum Empfang von Informationen, die den Betrieb des Flugzeugs darstellen, als Flugzeugdaten bezeichnet (20),
- ein Modul (43) zur Bestimmung von Betriebsvorgaben (22a, 22b) der Energieausstattungen ausgehend von den Ausstattungsdaten (21a, 21b, 21c) und von den Flugzeugdaten (20),
wobei die Vorrichtung dazu ausgelegt ist, die Schritte des Verfahrens nach einem der Ansprüche 1 bis 6 einzusetzen.

8. Vorrichtung nach Anspruch 7, **dadurch gekennzeichnet, dass** sie eine Mensch-Maschinen-Schnittstelle umfasst, die dazu angepasst ist, derart mit dem Modul (40) zur Auswahl zu interagieren, dass ein Betreiber über die Mensch-Maschinen-Schnittstelle ein Optimierungsziel (19) auswählen kann.

9. Verfahren nach einem der Ansprüche 7 und 8, **dadurch gekennzeichnet, dass** sie weiter ein Modul zur Berechnung einer den Nutzen jedes ausgewählten Optimierungsziels (19) darstellenden Größe in Bezug auf ein Standardziel umfasst.

## Claims

1. A method implemented by a device for optimised global management of an energy network of an aircraft comprising a plurality of energy-related equipment, the method being **characterised by**:
- a step (10) of selecting at least one optimisation objective (19) from among the following objectives:
- an objective of minimising the fuel consumption by said equipment of said energy network,
- an objective of maximising the transient performance of said propulsion equipment of said energy network,
- an objective of maximising the performance of the aircraft during short duration phases such as the take-off phase,
- an objective of minimising the maintenance costs of the equipment,
and, if the objective of minimising the fuel consumption by said equipment of said energy network is selected:
- a step (11) of receiving the following information:
- expected mission profile,
- flight conditions,
- weight of the aircraft in real time,
- ground height,
- contribution level of the energy-related equipment,
- engine parameters,
- health control parameters including: state of charge of storage units, temperatures of the storage units, starting engines temperatures,
- a step (12) for determining the following setpoints (22):
- power distribution setpoint between the engines,
- speed setpoint in rpm of a primary and/or secondary shaft of an engine to be put on standby,
- operating setpoint of the equipment of the non-propulsive system,
if the objective of maximising the transient performance of said propulsive equipment of said energy network is selected:
- a step (11) for receiving the following information:
- flight conditions,
- contribution level on the energy-related equipment,
- internal engine parameters,
- health control parameters including: state of charge of storage units, temperatures of the storage units, starting engines temperatures,
- a step (12) for determining the following setpoints:
- power distribution setpoints (22) between the engines,
- speed setpoint in rpm of a primary and/or secondary shaft of one or more engines on standby,
- operating setpoint of the equipment of the non-propulsive system,
if the objective of maximising the performance of the aircraft during short duration phases of the take-off phase type is selected:
- a step (11) of receiving the following information:
- flight conditions,
- weight of the aircraft in real time,
- ground height,
- contribution level of the energy-related equipment,
- internal engine parameters,
- health control parameters including: state of charge of storage units, temperatures of the storage units, starting engines temperatures,
- a step (12) for determining the following setpoints (22):
- power distribution setpoint between the engines,
- Authorisation by the engine control of AEO or OEI speeds,
- operating setpoint of the equipment of the non-propulsive system, if the objective of minimising equipment maintenance costs is selected:
- a step (11) for receiving the following information:
- flight conditions,
- weight of the aircraft in real time,
- number of passengers or payload,
- internal engine parameters,
- health control parameters including: state of charge of storage units, temperatures of the storage units, starting engines temperatures,
- damage counter,
- cycle counter for low cycle fatigue,
- a step (12) for determining the following setpoints (22):
- power distribution setpoint between the engines,
- speed setpoint in rpm of a primary and/or secondary shaft in standby,
- setpoint for the operation of the equipment of the non-propulsive system.

2. The method according to claim 1, **characterised in that** it further comprises a step of calculating a quantity representative of the benefit of each chosen optimisation objective in relation to a default objective.

3. The method according to claim 2, **characterised in that** said default objective aims at optimally distributing, according to the need, the propulsive energy between said energy-related equipment.

4. The method according to one of claims 1 to 3, **characterised in that** each optimisation objective (19) is aimed at for a predetermined period of time.

5. The method according to claim 4, **characterized in that** said predetermined period of time is selected from the group comprising a point in time, a predetermined time interval during a flight of the aircraft, a duration corresponding to an entire flight of the aircraft, to a duration corresponding to a complete operation of the aircraft.

6. The method according to one of claims 1 to 5, **characterised in that** said plurality of energy-related equipment comprises at least the following equipment:
- propulsive engines of the aircraft,
- non-propulsive engines,
- energy sources,
- energy converters.

7. A device for optimised global management of an energy network of an aircraft comprising a plurality of energy-related equipment, comprising:
- a module (40) for selecting at least one optimisation objective (19) from among the following objectives:
- an objective of minimising fuel consumption by said equipment of said energy network,
- an objective of maximising the transient performance of said propulsion equipment of said energy network,
- an objective of maximising the performance of the aircraft during short duration phases such as the take-off phase,
- an objective of minimising the maintenance costs of the equipment,
- a module (42) for receiving information representative of the operation of said energy-related equipment, known as equipment data (21a, 21b, 21c),
- a module (41) for receiving information representative of the operation of said aircraft, known as aircraft data (20),
- a module (43) for determining operating setpoint (22a, 22b) for said energy-related equipment from said equipment data (21a, 21b, 21c) and said aircraft data (20),
the device being configured to implement all the steps of the method according to any one of claims 1 to 6.

8. The device according to claim 7, **characterised in that** it comprises a man-machine interface adapted to interact with said selection module (40) such that an operator can select an optimisation goal (19) via the man-machine interface.

9. The device according to one of claims 7 and 8, **characterised in that** it further comprises a module for calculating a magnitude representative of the benefit of each selected optimisation objective (19) relative to a default objective.
